# FASCICULE DE BREVET EUROPEEN

(11) **EP 0 606 373 B1**
(45) Date de publication et mention de la délivrance du brevet: **03.07.1996**
(21) Numéro de dépôt: 92921470.8
(22) Date de dépôt: 02.10.1992
(51) Int. Cl.: B23Q 3/18

(54) **DISPOSITIF DE POSITIONNEMENT ET D'ACCOUPLEMENT D'UN ENTRAINEMENT**
POSITIONIER-UND KUPPLUNGVORRICHTUNG EINES ANTRIEBS
DRIVE POSITIONING AND COUPLING DEVICE

(30) Priorité: 02.10.1991 FR 9112123
(43) Date de publication de la demande: 20.07.1994
(73) Titulaire: CREATEC ROLLERS, F-91700 Sainte-Geneviève-des Bois (FR)
(72) Inventeur: ROUYER, Louis, F-92140 Clamart (FR); BASTIN, Jacques, F-91700 S.-Geneviève-des-Bois (FR)
(74) Mandataire: Leszczynski, André
(86) Numéro de dépôt international: FR9200915
(87) Numéro de publication internationale: WO9306966

(56) Documents cités:
- EP-A- 0 076 419
- CH-A- 232 685
- CH-A- 499 368
- FR-A- 1 274 404
- US-A- 2 784 534
- US-A- 3 222 825

## Description

La présente invention concerne un dispositif d'entraînement rotatif flottant d'une pièce à usiner par meulage, du type comprenant un mandrin solidaire, par une commande flexible, de l'arbre de sortie d'un moteur et de moyens de positionnement de ladite pièce terminée d'usinage.

Dans l'usinage par meulage "en plongée" de certains matériaux, notamment élastiques ou semi-élastiques, il peut être intéressant de donner un certain flottement à la pièce en cours d'usinage et/ou de surfaçage.

Un tel flottement ne peut être obtenu que par une liaison souple entre moteur et pièce à usiner et cela signifie nécessairement variations dans le positionnement relatif de la pièce en cours d'usinage et du dispositif d'entraînement.

Or, s'il est relativement simple de repositionner rigoureusement, à l'arrêt, la pièce terminée d'usinage, par exemple avec un dispositif à ressorts venant appuyer les deux extrémités de l'axe de ladite pièce contre deux butées ayant une position définie, il n'en est pas de même du système d'entraînement intermédiaire entre le dispositif moteur et la pièce, même repositionnée. En effet, au moment de l'arrêt, la position de ce dispositif reste aléatoire dans l'espace où il doit se déplacer pour permettre le flottement souhaité de la pièce en cours d'usinage. De plus, après débrayage de la pièce terminée d'usinage, sa liaison souple avec le moteur ne lui permet même pas de garder la même position.

Il s'ensuit une absence de positions constantes répétitives permettant une automatisation, par simple mécanisation, des opérations d'accouplement avec la nouvelle pièce à usiner.

Par ailleurs, il est évident-que toute pièce doit être embrayée avec ce dispositif d'entraînement pour pouvoir être usinée, puis débrayée après usinage.

La présente invention a pour objet un dispositif permettant de résoudre le problème de l'embrayage automatique de pièces à usiner par meulage avec un dispositif d'entraînement flottant, tant en ce qui concerne le positionnement relatif entre ce dernier et la pièce à usiner qu'en ce qui concerne la réalisation de leur liaison mécanique.

Le dispositif selon l'invention est essentiellement caractérisé en ce qu'il comporte des moyens d'accouplement automatique de ladite pièce avec ledit mandrin actionnables à la fin d'une opération d'usinage pour venir en appui contre ledit mandrin pour centrer ledit mandrin de manière que son axe de rotation soit confondu avec l'axe de rotation de la pièce terminée d'usinage et immobiliser ledit mandrin dans cette position pendant l'enlèvement de la pièce terminée d'usinage et la mise en place d'une nouvelle pièce, lesdits moyens d'accouplement étant actionnables pour libérer ledit mandrin dès cette mise en place afin de permettre le flottement souhaité de la pièce suivante à usiner.

Selon une autre caractéristique de l'invention, les moyens de prise sont constitués d'un bâti fixe portant plusieurs éléments disposés circulairement et définissant entre eux un espace libre qui correspond à l'ensemble des positions que peut présenter le dispositif d'entraînement pendant l'usinage, lesdits éléments pouvant se rapprocher radialement à la manière d'un diaphragme pour venir emprisonner ledit système d'entraînement dans une position où son axe longitudinal sera confondu avec celui des pièces positionnées après usinage.

Dans une réalisation simplifiée de l'invention, les moyens de prise sont constitués d'une pince à au moins un élément qui est articulé sur un point fixe et comporte une mâchoire dont la surface de travail présente un profil comprenant au moins deux parties inclinées en opposition l'une par rapport à l'autre de telle manière que le dispositif d'entraînement des pièces en usinage se place automatiquement dans les creux des V formés par les mâchoires et soit ainsi positionné de façon précise par rapport à l'articulation desdits éléments.

Dans une variante de réalisation, la pince comporte au moins deux éléments articulés et munis de mâchoires à surface de travail en V.

Suivant une caractéristique intéressante de l'invention, chaque élément portant une mâchoire est articulé sur un point fixe différent de l'autre de manière à diminuer le bras de levier d'application de la force exercée et à rapprocher la direction des deux forces de sens opposés s'appliquant sur le dispositif d'entraînement saisi et ainsi diminuer les pertes d'énergie.

Suivant une autre caractéristique de l'invention, au moins une mâchoire est équipée d'un verrou qui coopère avec une gâche prévue sur le dispositif d'entraînement de manière à remplacer les efforts axiaux d'immobilisation de ce dernier par un blocage mécanique et à économiser ainsi l'énergie nécessaire a cette immobilisation.

Suivant une autre caractéristique intéressante sur le plan économique, de l'invention, les deux mâchoires sont identiques et actionnées par des biellettes également identiques commandées par un seul vérin.

D'autres caractéristiques apparaîtront au cours de la description qui va suivre d'un exemple, donné à titre indicatif, de réalisation de l'invention, en relation avec les figures jointes dans lesquelles :
- la figure 1 montre un dispositif d'entraînement de l'axe d'une pièce à usiner suivant l'invention ;
- la figure 2 est une coupe suivant la ligne II-II de la figure 1 ;
- la figure 3 est une coupe partielle suivant la ligne III-III de la figure 1.

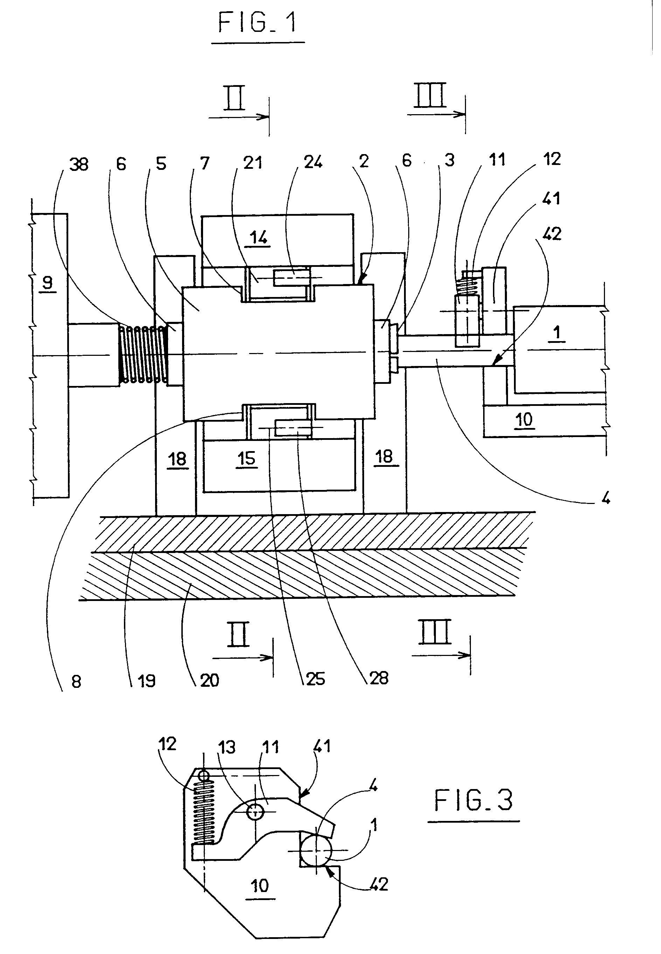

Sur la figure 1, le dispositif d'entraînement de la pièce 1 à usiner comprend un mandrin 2 composé d'un corps extérieur 5 et d'une pièce intérieure 6.

Deux évidements 7 et 8, faisant fonction de gâches, sont prévus sur le corps extérieur 5, tandis que la pièce intérieure 6 porte, à l'une de ses extrémités, trois mors 3 destinés à enserrer l'axe 4 de la pièce 1. Le déplacement radial de ces mors pour serrage ou desserrage est obtenu classiquement par rotation relative du coprs extérieur 5 et de la pièce intérieure 6.

Par son autre extrémité, la pièce intérieure 6 est solidaire d'une commande flexible constituée par un ressort 38 solidaire lui-même de l'arbre de sortie d'un moteur unique 9 qui sert, à la fois, à entraîner en rotation la pièce 1 et à serrer et desserrer les mors 3 du mandrin 2, comme il sera expliqué plus loin.

L'axe 4 de la pièce 1 est maintenu sur une pièce 10 comportant deux surfaces en équerre 41 et 42 (voir figure 3), grâce à l'action d'un ressort 12, par un levier 11 articulé en 13 sur la pièce 10.

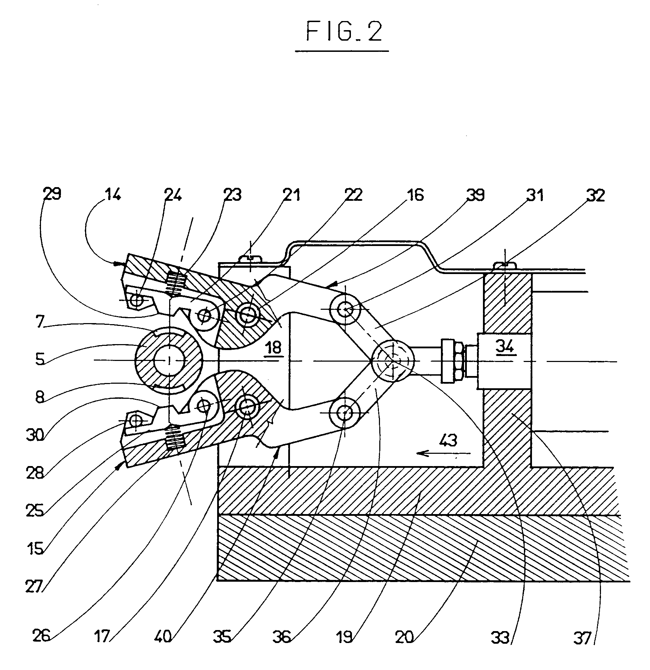

Au droit de la partie médiane du corps extérieur 5, se trouve une pince constituée de deux éléments 39 et 40 dont le détail apparaît sur la figure 2.

L'élément 39 comporte une mâchoire 14 et est articulé sur un axe 16 fixe disposé sur deux montant 18 d'un bâti 19 porté par une semelle 20.

La mâchoire 14 présente une surface de travail constituée de deux parties inclinées l'une par rapport à l'autre de manière à former une sorte de V, et porte un verrou 21 articulé en 22 et soumis à l'action d'un ressort 23.

Le verrou 21 est limité dans sa course par une butée 24 et porte, au droit des évidements 7 et 8 du corps 5 du mandrin 2, un ergot 29 disposé dans le creux du V formé par la surface de travail de la mâchoire 14.

L'élément 40 comporte une mâchoire 15 et est articulé sur un axe 17 fixe disposé sur les deux montants 18 du bâti 19;

La mâchoire 15 est identique à la mâchoire 14 avec une surface de travail en V et porte un verrou 25 articulé en 26 et soumis à l'action d'un ressort 27.

Comme le verrou 21, le verrou 25 est limité dans sa course par une butée 28, et porte, au droit des évidements 7 et 8, un ergot disposé dans le creux du V formé par la surface de travail de la mâchoire 15.

L'extrémité de l'élément 39 opposée à la mâchoire 14 par rapport à l'axe 16, est articulée en 31 sur l'une des extrémités d'une biellette 32 dont l'autre extrémité est articulée en 33 sur la tête d'un vérin 34 qui est positionné de façon précise sur un montant 37 du bâti 19.

De même, l'extrémité de l'élément 40 opposée à la mâchoire 15 par rapport à l'axe 17 est articulée en 35 sur l'une des extrémités d'une biellette 36 dont l'autre extrémité est articulée en 33 sur la tête du vérin 34.

Dans ces conditions, le fonctionnement s'établit comme expliqué ci-après.

Lorsqu'un cycle d'usinage se termine, on se trouve dans la situation illustrée aux figures 1 et 3, c'est-à-dire que l'axe 4 se trouve, grâce à l'action des leviers 11, en appui contre les surfaces 41 et 42 des pièces 10.

Mais il n'en est pas de même du mandrin 2 dont la position, au moment de l'arrêt sera l'une quelconque des différentes positions qu'il doit prendre pour permettre le flottement de la pièce en cours d'usinage. De plus, sa liaison mécanique avec l'arbre du moteur 9 étant une liaison souple, il ne peut que retomber lorsque la pièce usinée est débrayée.

C'est pourquoi, dès la fin de l'usinage, la tête de vérin 34 avance dans le sens de la flèche 43, ouvrant l'angle formé par les biellettes 32 et 36 et rapprochant ainsi les surfaces de travail des mâchoires 14 et 15.

Compte tenu de la forme en V, ces surfaces de travail enserrent le corps 5 du mandrin 2 en le centrant par rapport aux creux des V et en le positionnant ainsi de telle manière que son axe longitudinal soit confondu avec l'axe de rotation de la pièce 1 en fin d'usinage.

En fonction de la position angulaire du corps extérieur 5 du mandrin 2 au moment de l'arrêt, les ergots 29 et 30 des verrous 21 et 25 peuvent se trouver face aux évidements 7 et 8, auquel cas, les ressorts 23 et 27 vont les faire entrer dans ces évidements. Dans le cas contraire, ils sont escamotés, les dits ressorts étant comprimés par la pression exercée sur le corps extérieur 5 par les mâchoires 14 et 15.

Lorsque le mandrin 2 est maintenu dans la position voulue par les mâchoires 14 et 15, le moteur 9 se met en route, à vitesse lente pour entraîner en rotation la pièce intérieure 6 sans entraîner le coprs extérieur 5, et obtenir ainsi le desserrage de l'axe de la pièce usinée.

C'est là qu'interviennent les ergots 29 et 30 et les évidements 7 et 8.

Si les premiers se trouvent dans les seconds, ceux-ci font office de gâches et coopèrent avec les ergots pour bloquer angulairement le corps extérieur 5, de manière à obtenir une rotation de la seule pièce intérieure 6 en vue de libérer l'axe 4 de la pièce usinée.

Si, au contraire, les ergots sont en appui sur la périphérie pleine du corps extérieur, celui-ci peut être entraîné en rotation par les frottements existants avec la pièce intérieure 6. Dans ce cas, les mâchoires 14 et 15 étant fixes ainsi que les ergots qu'elles portent, les évidements 7 et 8 vont, avant un demi-tour du corps extérieur 5, venir au droit des dits ergots qui y rentreront sous l'effet des ressorts 23 et 27, assurant mécaniquement un blocage angulaire du corps extérieur 5 plus économique qu'un blocage obtenu par serrage des mâchoires 14 et 15.

Lorsque l'axe de la pièce usinée est libéré, le moteur 9 s'arrête et la pièce est retirée et remplacée par une autre dans la même position, c'est-à-dire en appui contre les surfaces 41 et 42, avec une extrémité de son axe 4 placée entre les mors 3 du mandrin 2.

Le moteur 9 se met alors en route à vitesse lente, et en rotation inverse, pour réaliser le serrage de l'axe 4 de la nouvelle pièce par un mouvement également inverse de la pièce intérieure 6.

Lorsque ce serrage est réalisé, la tête de vérin 34 recule, en sens contraire de la flèche 43, ce qui libère le mandrin 2 de l'emprise des mâchoires 14 et 15.

L'usinage de la nouvelle pièce peut alors avoir lieu et, en fin d'usinage, un nouveau cycle, recommencer dont toutes les étapes, ainsi que montré par la description qui précède, peuvent être automatisées facilement puisqu'il s'agit d'opérations élémentaires à effectuer sur des objets positionnés de façon précise.

Il est entendu que l'on peut modifier des détails de construction et/ou de fonctionnement dans le cadre des revendications en vue d'obtenir les mêmes résultats.

Par exemple, la commande souple du mandrin 2 pourrait être remplacée par une articulation à la Cardan.

Par exemple également, les ergots assurant l'immobilisation angulaire du corps extérieur du mandrin en vue du débrayage de la pièce terminée d'usinage et de l'embrayage de la nouvelle pièce, pourraient être remplacés par deux roues à rochet inversées ou même par au moins deux méplats diagonalement opposés permettant une immobilisation avec une clef ad hoc.

## Revendications

1. Dispositif d'entraînement rotatif flottant d'une pièce à usiner par meulage, comprenant un mandrin (2) qui est solidaire, par une commande flexible (38), de l'arbre de sortie d'un moteur (9), et des moyens de positionnement de ladite pièce terminée d'usinage, caractérisé en ce qu'il comporte des moyens (14,39;15,40) d'accouplement automatique de ladite pièce avec ledit mandrin actionnables à la fin d'une opération d'usinage pour venir en appui contre ledit mandrin pour centrer ledit mandrin de manière que son axe de rotation soit confondu avec l'axe de rotation de la pièce terminée d'usinage et immobiliser ledit mandrin dans cette position pendant l'enlèvement de la pièce terminée d'usinage et la mise en place d'une nouvelle pièce, lesdits moyens d'accouplement étant actionnables pour libérer ledit mandrin dès cette mise en place afin de permettre le flottement souhaité de la pièce suivante à usiner.

2. Dispositif suivant la revendication 1, caractérisé en ce que lesdits moyens d'accouplement comprennent plusieurs pièces (39,40) portées par un bâti fixe (18) et disposées autour d'un espace libre au moins égal à l'ensemble des positions que peut présenter le dispositif d'entraînement en fin d'usinage, lesdites pièces pouvant se déplacer vers un axe fixe par rapport audit bâti.

3. Dispositif suivant la revendication 2, caractérisé en ce que lesdites pièces (39,40) constituent une pince à au moins une mâchoire (14,15) articulée sur un point fixe (16,17) par rapport au bâti (18) qui la porte, l'appui de travail de ladite mâchoire présentant au moins deux surfaces inclinées en opposition l'une par rapport à l'autre.

4. Dispositif suivant la revendication 3, caractérisé en ce qu'il comporte une pince à au moins deux mâchoires symétriques (14,15).

5. Dispositif suivant la revendication 4, caractérisé en ce que chaque mâchoire est articulée sur un point fixe différent de l'autre.

6. Dispositif suivant l'une quelconque des revendications précédentes, caractérisé en ce que le mandrin comporte un corps extérieur (5) et un porte-mors (6) solidaire par la commande flexible (38) de l'arbre de sortie du moteur, ledit dispositif comportant des moyens de blocage angulaire du corps extérieur (5) du mandrin.

7. Dispositif suivant la revendication 6, caractérisé en ce que les moyens de blocage comprennent au moins un verrou (21,25) monté sur au moins une mâchoire (14,15) et qui coopère avec une gâche (7,8) prévue sur le corps extérieur (5) du mandrin (2) pour le bloquer en position angulaire.

8. Dispositif suivant l'une quelconque des revendications 3 à 7, caractérisé en ce qu'il comprend deux mâchoires (14,15) identiques et actionnées par des biellettes (32,36), également identiques, commandées par un seul vérin (34).

## Claims

1. Floating rotary drive device for a workpiece to be machined by grinding, comprising a chuck (2) which is connected, by a flexible drive (38), to the output shaft of a motor (9), and means for positioning said finished machined workpiece, characterized in that the device comprises means (14, 39; 15, 40) for automatic coupling of said workpiece to said chuck which can be actuated at the end of a machining operation to come into bearing on said chuck for centering said chuck in such a way that its axis of rotation shall coincide with the axis of rotation of the finished machined work-piece and for immobilizing said chuck in this position during the removal of the finished machined workpiece and the positioning of a new workpiece, said coupling means being capable of being actuated for releasing said chuck as soon as this positioning has been performed, in order to allow the desired floating of the next workpiece to be machined.

2. Device according to Claim 1, characterized in that said coupling means comprise several components (39, 40) carried by a fixed frame (18) and disposed around a free space at least equal to the totality of the positions that the drive device can occupy at the end of machining, said components being able to displace towards an axis fixed relative to said frame.

3. Device according to Claim 2, characterized in that said components (39, 40) constitute a grip having at least one jaw (14, 15) articulated about a fixed point (16, 17) relative to the frame (18) which carries it, the working support of said jaw having at least two surfaces inclined in opposition to each other.

4. Device according to Claim 3, characterized in that it comprises a grip having at least two symmetrical jaws (14, 15).

5. Device according to Claim 4, characterized in that each jaw is articulated about a fixed point different from the other.

6. Device according to any one of the preceding Claims, characterized in that the chuck comprises an outer body (5) and a jaw-carrier (6) integral with the flexible drive (38) of the output shaft of the motor, said device comprising means for angularly blocking the outer body (5) of the chuck.

7. Device according to Claim 6, characterized in that the blocking means comprise at least one bolt (21, 25) mounted on at least one jaw (14, 15), which bolt cooperates with a notch or catch (7, 8) provided on the outer body (5) of the chuck (2) for blocking it in an angular position.

8. Device according to any one of Claims 3 to 7, characterized in that it comprises two identical jaws (14, 15) actuated by connecting rods (32, 36), also identical, controlled by a single jack (34).

## Patentansprüche

1. Vorrichtung für schwimmenden Drehantrieb eines durch Schleifen zu behandelnden Werkstücks, mit einer Spindel (2), die über eine flexible Verbindung (38) mit einer Ausgangswelle eines Motors (9) verbunden ist und mit Mitteln zur Positionierung des fertig bearbeiteten Werkstücks, dadurch gekennzeichnet, daß sie automatische Kupplungsmittel (14, 39; 15, 40) aufweist für das Werkstück mit der Spindel, die bei Ende einer Bearbeitung betätigbar sind, um in Anlage an die Spindel zu kommen, sodaß diese so zentriert wird, daß ihre Drehachse zusammenfällt mit der Rotartionsachse des fertig bearbeiteten Werkstücks und die Spindel in dieser Position festgehalten wird, während das fertig bearbeitete Werkstück entnommen wird und ein neues Werkstück Vorlage kommt, wobei die Kupplungsmittel betätigbar sind, um die Spindel während dieser Vorlage freizugeben, sodaß das erwünschte Schwimmen des nachfolgend zu bearbeitenden Werkstücks ermöglicht wird.

2. Vorrichtung nach Anspruch 1, dadurch gekennzeichnet, daß die genannten Kupplungsmittel mehrere Teile (39, 40) aufweisen, die von einem festen Gestell (18) getragen und angeordnet sind um einen Freiraum, der zumindest der Gesamtheit der Positionen entspricht, die die Vorrichtung für Drehantrieb am Ende der Bearbeitung einnehmen kann, die genannten Teile sind zu einer festen Achse bezüglich des genannten Gestells bewegbar.

3. Vorrichtung nach Anspruch 2, dadurch gekennzeichnet, daß die genannten Teile (39, 40) eine Greifvorrichtung mit mindestens einer Backe (14, 15) bilden, die um einen bezüglich des sie tragenden Gestells (18) festen Punkt angelenkt ist, der Arbeitsanschlag dieser Backe hat dabei mindestens zwei geneigte Oberflächen, die in Gegenrichtung zueinander angeordnet sind.

4. Vorrichtung nach Anspruch 3, dadurch gekennzeichnet, daß sie eine Haltevorrichtung mit mindestens zwei symmetrischen Backen (14, 15) aufweist.

5. Vorrichtung nach Anspruch 4, dadurch gekennzeichnet, daß jede Backe um einen eigenen, von demjenigen der anderen Backe verschiedenen, festen Punkt gelenkig angeordnet ist.

6. Vorrichtung nach einem der Ansprüche 1 bis 5, dadurch gekennzeichnet, daß die Spindel ein äußeres Geräteteil (5) und einen Spannbackenträger (6) aufweist, der über die flexible Verbindung (38) mit der Ausgangswelle des Motors verbunden ist, wobei die Anordnung Winkelblockiermittel für das äußere Geräteteil (5) der Spindel hat.

7. Vorrichtung nach Anspruch 6, dadurch gekennzeichnet, daß die Blockiermittel mindestens einen Riegel (21, 25) aufweisen, der an mindestens einer Backe (14, 15) befestigt ist und mit einem Schließteil (7, 8) zusammenwirkt, daß am äußeren Geräteteil (5) der Spindel (2) vorgesehen ist, um es in Winkelposition zu blockieren.

8. Vorrichtung nach einem der Ansprüche 3 bis 7, dadurch gekennzeichnet, daß sie zwei Backen (14, 15) aufweist, die baugleich sind und von ebenfalls baugleichen Schwingarmen (32, 36) betätigt werden, welche von einer einzigen Stellvorrichtung (34) gesteuert sind.
